# EUROPEAN PATENT SPECIFICATION

(11) **EP 0 916 864 B1**
(45) Date of publication and mention of the grant of the patent: **10.11.2004**
(21) Application number: 98117398.2
(22) Date of filing: 14.09.1998
(51) Int. Cl.: F16D 23/06

(54) **A synchronizing unit for the gears of a motor vehicle transmission**
Synchronisiereinrichtung für die Zahnräder eines Kraftwagengetriebes
Unité de synchronisation pour les engrenages d'une transmission d'un véhicule

(30) Priority: 12.11.1997 IT TO970989
(43) Date of publication of application: 19.05.1999
(73) Proprietor: FIAT AUTO S.p.A., 10135 Torino (IT)
(72) Inventor: Gallinaro, Ernesto, 10141 Torino (IT)
(74) Representative: Di Francesco, Gianni

(56) References cited:
- EP-A- 0 267 714
- US-A- 4 732 247
- US-A- 5 135 087
- PATENT ABSTRACTS OF JAPAN vol. 96, no. 3, 29 March 1996 & JP 07 301255 A (KWOYO GOKIN), 14 November 1995

## Description

The present invention refers to a free ring synchronizing unit of the multiple cone type, for a motor vehicle transmission gearbox. Such a synchronizing unit is known from EP-A-267 714.

There are known prior art synchronizing units which comprise, besides the gear with integral engagement toothing, an outer synchronizing ring, an inner synchronizing ring, and also an intermediate synchronizing ring which provides an improved and easier engagement for the single gears. Further, the gear and the inner ring may or may not have an inner synchronizing cone, depending on whether the synchronizing unit is a single or double cone synchronizing unit, respectively.

The above intermediate ring used is provided in synchronizing units in order to be rotated by means of driving tabs, usually in number of three, engaged in grooves formed in the gear hub with engagement toothing.

The above discussed synchronizing unit, although it avoids synchronization and engagement problems, does not provide a power actuated engagement, which could allow a reduction of the stress on the gear lever when switching gear.

The object of the present invention is to provide a synchronizing unit of the above discussed type which allows to attain an improved engagement, facilitated by power actuation of the synchronizing torque.
This object is achieved according to the present invention by means of a free ring synchronizing unit, connected to at least one gear with an integral engagement toothing and provided with at least one hub, a thrust sleeve, an outer synchronizing ring, an inner synchronizing ring, and an intermediate synchronizing ring being rotated around an axis by driving tabs engaging a plurality of U-shaped grooves formed in the gear hub, characterized in that the cross section of said grooves in axial direction is shaped in the form of an isosceles trapezium, the oblique sides of which are contained in the planes defining the flanks of the groove, the longer base of the trapezium being comprised in the plane forming the closed bottom of the groove, whilst the shorter base of said trapezium is located at the open side of the groove.

Further characteristics and advantages will be clearly understood from the following description, provided as a non limiting example, reference being made to the attached drawings, in which:
Fig. 1 is a schematic axial cross section view of a synchronizing unit according to the invention; and
Fig. 2 is a plan view of a detail of Fig. 1.

With reference to the drawings, numeral 1 designates in dotted line the axis of a secondary transmission shaft, even though the invention can also be applied to the primary shaft without any problems. Mounted to a secondary shaft is a gear 3 belonging to one of the transmission speeds (for instance the third speed). Gear 3 is provided with an engagement toothing 4 integral thereto. A hub 6 is axially displaceable along the shaft, driven by a sleeve 7 in turn controlled by means of one of the control gearshift forks (not shown).

An outer synchronizing ring 9 is rotated by hub 6 by means of a toothing 11. The outer synchronizing ring 9 drives in turn an inner synchronizing ring 14 by means of recesses 13. The inner ring 14 is provided with projections 15 to engage the recesses 13. Between the inner synchronizing ring 14 and the outer synchronizing ring 9, a third intermediate synchronizing ring 17 is provided. Intermediate ring 17 has a radial projection 18 towards the secondary shaft, carrying a plurality of driving tabs 20.

The tabs 20 are adapted to engage U-shaped grooves 22 formed on the hub of gear 3. Grooves 22 have an isosceles trapezoid shaped cross section, the oblique sides of which are contained in the planes defining the groove flanks; the longer base of the trapezium is comprised in the plane forming the groove bottom, whereas the shorter base is located at the open side of the groove. Springs 28 made of harmonic steel sheet, provided to bring the intermediate ring 17 to the starting position when the synchronizing phase is over, are contained in grooves 22 at a location between the bottom side 26 and the portions of tab 20 engaging said grooves.

Operation of the synchronizing unit is as follows.

Whereas the synchronizing unit works as a conventional unit during the pre-synchronizing and engagement phases, during the actual synchronizing phase, the synchronizing unit according to the invention produces, as a counter reaction, a synchronizing interlocking torque being proportional to the force applied from the outside (through the gearshift lever), and being a direct function of the taper angle of the flanks 24 of the grooves 22 formed on the hub of gear 3.

When the chamfers on sleeve 7 engage the chamfers of the outer synchronizing ring 9 and the synchronizing phase begins, the axial force exerted from outside causes a resisting and synchronizing torque between the cones of the outer synchronizing ring 9 and the inner synchronizing ring 14 and the intermediate ring 17 (i.e. between the inertial forces of the transmission gears rotating at different speeds upstream and downstream of the synchronizing unit).

As known, the torque is proportional to the following geometric parameters of the unit: cone angle, diameters of the conical surfaces, friction coefficient.

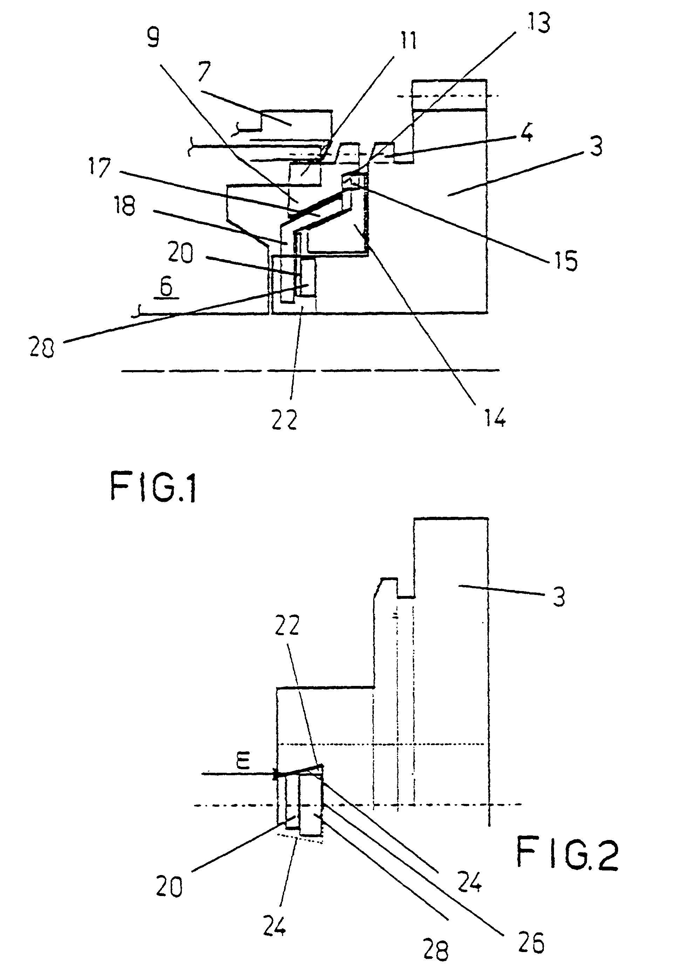

The intermediate ring transmits the synchronizing torque to gear 3 and to the connected gearing through the driving tabs 20, by means of a tangential contact reaction proportional to the synchronizing torque and inversely proportional to the contact diameter of the tabs 20 on the gear 3 (the flanks of grooves 22). The taper (inclination) of the flanks of the grooves 22 formed on the hub of gear 3 generates in said contact points an axial force (indicated by arrow E in Fig. 2) between the intermediate ring and the gear, which force pushes the intermediate ring against the inner ring creating an additional synchronizing torque there between.

Said synchronizing torque is added to the one provided by the axial force on the outer ring applied through the gearshift lever and thus produces a better performance by the synchronizing unit during the whole synchronizing phase. Being the maneuvering time periods equal, the axial force to be produced by the driver is reduced or, vice versa, the maneuvering time period is reduced when the axial force applied through the gearshift lever remains the same.

Once the synchronizing phase is over, the thrust of the intermediate ring over the inner ring terminates, the spring 28 moves the intermediate ring 17 to its starting position, restoring the initial axial clearance between rings, thus avoiding friction on the conical surfaces and therefore any ring displacement.

Working tests have shown that with a taper angle of the flanks 24, relative to the bottom wall 26 of the grooves 22, of about 20°, yields an 80% increase of the synchronizing torque. The taper of the flanks can reach a maximum useful angle of 30 degrees, beyond which the torque increase becomes insignificant or unmanageable.

As already said, the invention is also applicable to triple cone synchronizing units; the engagement between the outer and inner synchronizing rings may be accomplished through configurations different from the ones described above, as long as they are compatible with the manufacturing process requirements, without departing from the scope of the present invention as defined in the claims. Thus, the invention allows to improve the performances of a double or triple cone synchronizing unit, without structural problems or cost increases, as for instance the increase of the specific diameters and therefore of the overall size, the coatings of the synchronizing ring cones with materials having a high friction coefficient, etc.

## Claims

1. A free ring synchronizing unit, connected to at least one gear (3) with an integral engagement toothing and provided with at least one hub (6), a thrust sleeve (7), an outer synchronizing ring (9), an inner synchronizing ring (14), and an intermediate synchronizing ring (17) being rotated around an axis by driving tabs (20) engaging a plurality of U-shaped grooves (22) formed in the gear hub, **characterized in that** the cross section of said grooves (22) in axial direction is shaped in the form of an isosceles trapezium, the oblique sides of which are contained in the planes defining the flanks (24) of the groove, the longer base (26) of the trapezium being comprised in the plane forming the closed bottom of the groove, whilst the shorter base of said trapezium is located at the open side of the groove.

2. A unit according to claim 1, **characterized in that** the taper of the flanks (24) of the grooves (22) is comprised between a minimum angle of about 10 degrees and a maximum angle of about 30 degrees, preferably of 20 degrees.

3. A unit according to claim 1, **characterized in that** between the tabs engaged in the grooves (22) and the bottom side (26) thereof there is fitted an elastic member capable of being compressed during the movement of the tabs (20).

4. A unit according to claim 3, **characterized in that** the elastic member is a spring made of harmonic steel sheet.

## Patentansprüche

1. Synchronisiereinrichtung mit freiem Ring, die mit zumindest einem Zahnrad (3) mit einer einstückigen Eingriffsverzahnung verbunden ist und mit zumindest einer Nabe (6), einer Schubhülse (7), einem äußeren Synchronisierring (9), einem inneren Synchronisierring (14) und einem zwischenliegenden Synchronisierring (17), der durch Antriebszungen (20), die in mehrere U-förmige Rillen (22) eingreifen, welche in der Radnabe ausgebildet sind, um eine Achse gedreht wird, versehen ist, **dadurch gekennzeichnet, daß** der Querschnitt der Rillen in der axialen Richtung in der Form eines gleichschenkligen Trapezes geformt ist, wobei dessen schräge Seiten in den Ebenen, die die Flanken (24) der Rillen definieren, enthalten sind, wobei die längere Grundlinie (26) des Trapezes in der Ebene umfaßt ist, die den geschlossenen Boden der Rille ausbildet, während die kürzere Grundlinie des Trapezes an der offenen Seite der Rille angeordnet ist.

2. Einrichtung nach Anspruch 1, **dadurch gekennzeichnet, daß** die Verjüngung der Flanken (24) der Rillen (2) zwischen einem Mindestwinkel von etwa 10 Grad und einem Höchstwinkel von etwa 30 Grad, vorzugsweise von 20 Grad enthalten ist.

3. Einrichtung nach Anspruch 1, **dadurch gekennzeichnet, daß** zwischen den Zungen, die in den Rillen (22) in Eingriff genommen sind, und der Bodenseite (26) davon ein elastisches Glied eingepaßt ist, das imstande ist, während der Bewegung der Zungen (20) zusammengedrückt zu sein.

4. Einrichtung nach Anspruch 3, **dadurch gekennzeichnet, daß** das elastische Glied eine Feder ist, die aus harmonischem Stahlblech hergestellt ist.

## Revendications

1. Unité de synchronisation à bagues libres, reliée au moins à un engrenage (3) doté d'une denture d'engrènement d'un seul tenant avec lui, et comportant au moins :
- un moyeu (6) ;
- un manchon (7) de poussée;
- une bague (9) de synchronisation extérieure ;
- une bague (14) de synchronisation intérieure ; et
- une bague (17) de synchronisation intermédiaire,
mises en rotation autour d'un axe par des ergots (20) d'entraînement coopérant avec une pluralité de gorges (22) en forme de « U », formées dans le moyeu d'engrenage,
**caractérisée en ce que** la section transversale des gorges (22) dans le sens axial, a la forme d'un trapèze isocèle, dont les côtés obliques sont contenus dans les plans définissant les flancs (24) de la gorge, la grande base (26) du trapèze étant comprise dans le plan formant le fond fermé de la gorge, tandis que la petite base du trapèze se trouve du côté ouvert de la gorge.

2. Unité suivant la revendication 1, **caractérisée en ce que** la conicité des flancs (24) des gorges (22) est comprise entre un angle minimum d'environ 10 degrés et un angle maximum d'environ 30 degrés, et est de préférence, de 20 degrés.

3. Unité suivant la revendication 1, **caractérisée en ce qu'**entre les ergots coopérant avec les gorges (22) et le côté (26) inférieur de celles-ci, il est monté un élément élastique apte à être comprimé pendant le déplacement des ergots (20).

4. Unité suivant la revendication 3, **caractérisé en ce que** l'élément élastique est un ressort en tôle d'acier harmonique.
